# EUROPÄISCHE PATENTSCHRIFT

(11) **EP 0 939 264 B1**
(45) Veröffentlichungstag und Bekanntmachung des Hinweises auf die Patenterteilung: **17.08.2005**
(21) Anmeldenummer: 99103535.3
(22) Anmeldetag: 24.02.1999
(51) Int. Cl.: F16L 23/036, F16L 23/04

(54) **Schnellverschluss**
Quick fastener
Dispositif de verrouillage rapide

(30) Priorität: 27.02.1998 AT 35598
(43) Veröffentlichungstag der Anmeldung: 01.09.1999
(73) Patentinhaber: Popov, Ivaylo, Dipl.-Ing., 63477 Maintal (DE)
(72) Erfinder: Popov, Ivaylo, Dipl.-Ing., 63477 Maintal (DE)
(74) Vertreter: Hoffmann, Klaus-Dieter, Dipl.-Ing.

(56) Entgegenhaltungen:
- AT-B- 394 428
- DE-A- 19 627 841
- GB-A- 433 966
- GB-A- 1 019 691

## Beschreibung

Die Erfindung betrifft einen Schnellverschluß, der im Maschinen- und Anlagenbau zum Verbinden von Teilen von Kesseln und Pipelines dient, in denen ein Mediumdruck herrscht, der unterschiedlich vom in der Umgebung herschenden Mediumdruck ist.

In der Praxis sind sogenannte Bajonettverschlüsse bekannt, die aus zwei übereinander angeordneten Flanschen bestehen, wobei in einem der beiden Flansche in einer vorgegebenen Teilung Zähne ausgebildet sind und in einem der beiden Flansche auch eine eine elastische Dichtung aufnehmende Nut vorgesehen ist. Die beiden Flansche weisen eine runde Querschnittsform auf und sind untereinander durch einen monoliten, aus einem gerollten Blech gebildeten und gefrästen Ring verbunden, in dessen Innenmantel Zähne in einer Teilung gefertigt sind, die der Teilung im Flansch entspricht.

Die Anwendung derartiger Schnellverschlüsse ist begrenzt, da sie nur zum Verbinden/Verschließen von Elementen von Kesseln oder Pipelines verwendbar sind, die einen runden Querschnitt aufweisen. Ein Verbinden von Elementen von Druckgefäßen oder Pipelines mit einer anderen Querschnittform, z.B. einer elliptischen oder ovalen Querschnittsform ist nicht möglich. Ein weiterer Nachteil dieses bekannten Schnellverschlusses ist der monolite Bajonattring, dessen Fertigung nur durch einen erhöhten Arbeitsaufwand möglich ist, was die technologischen Eigenschaften der gesamten Verbindung ungünstig beeinflußt.

Bekannt ist weiterhin ein Schnellverschluß aus zwei Flanschen (GB-A-1019691), wobei einer von den beiden Flanschen mit einer eine elastische Dichtung aufnehmenden Nut versehen ist, die beiden Flansche untereinander durch einzelne am Umfang der Flansche angeordnete Klemmen verbunden sind und die Klemmen ihrerseits durch zwei Blechringe verbunden sind.

Zum technologischen Hintergrund der Erfindung zählt auch eine Vorrichtung zum Gegeneinanderpressen von zwei Flanschen einer Rohrverbindung, wobei es sich um einen zylindrischen und einen konischen Flansch handelt (DE 196 27 841 A1). Diese Vorrichtung weist eine Spannkette mit Laschen und Druckstücken auf, die über Gelenke mit parallelen Achsen schwenkbar miteinander verbunden sind. Die Druckstücke weisen je zwei unterschiedlich ausgebildete Flanken zur Anlage an den Flanschen auf. Eine Spannvorrichtung dient zum Gegeneinanderziehen von zwei einander benachbarten Gelenken.

Der Erfindung liegt die Aufgabe zugrunde, einen im Maschinen- und Anlagenbau einsetzbaren Schnellverschlusses in einfach aufgebauten und technisch leicht zu fertigenden Ausführungen derart zur Verfügung zu stellen, daß Elemente von Kesseln oder Pipelines einerseits mit unrundem Querschnitt, z.B. mit einem elliptischen oder ovalen Querschnitt und andererseits mit runden Querschnitt mit der jeweils entsprechenden Ausführung des Schnellverschlusses hermetisch abdichtend verbunden/verschlossen werden können, wobei der jeweilige Schnellverschluß bei Bedarf einfach und schnell wieder zu lösen/ öffnen sein soll.

Diese Aufgabe wird einserseits erfindungsgemäß gelöst durch einen Schnellverschluß aus zwei Flanschen mit jeweils unrunder, wie ovaker oder elliptischer Querschnittsform, wobei ein Flansch mit einer eine elastische Dichtung aufnehmenden Nut versehen ist, in einem Flansch der beiden Flansche Zähne vorgesehen sind und die beiden Flansche untereinander durch einzelne Klemmen verbunden sind, die sich am Umfang der Flansche befinden und deren Anzahl der Anzahl und der Teilung der im Flansch ausgeführten Zähne entspricht, und wobei die einzelnen Klemmen untereinander durch jeweils auf zueinander entgegengesetzten Seiten letzterer übereinander angeordnete Segmente und zylindrische Scharniere einen Klemmering bildend verbunden sind.

Anderseits wird die Aufgabe erfindungsgemäß gelöst durch einen Schnellverschluß aus zwei Flanschen, wobei ein Flansch mit einer eine elastische Dichtung aufnehmenden Nut versehen ist, in einem der beiden Flansche Zähne vorgesehen sind und die beiden Flansche untereinander durch einzelne Klemmen verbunden sind, die sich am Umfang der Flansche befin-den und deren Anzahl der Anzahl und der Teilung der im Flansch ausgeführten Zähne entspricht, und wobei die Klemmen ihrerseits durch zwei Blechringe, die jeweils auf zueinander entgegengesetzten Seiten der Klemmen vorgesehen sind, verbunden sind.

Die Erfindung ermöglicht vorteilhaft einen erweiterten Anwendungsbereich des Schnellverschlusses, da ein hermetisch gasdichtes Verbinden von Teilen von Druckgefäßen oder Pipelines einerseits mit runder Querschnittsform und andererseits auch mit unrunder wie z.B. elliptischer oder ovaler Querschnittsform je nach Wahl der entsprechenden Ausführungsform des Schnellverschlusses möglich ist. Die erfindungsgemäße Ausführungsformen des Schnellverschlusses lassen sich zudem fertigungstechnisch auf einfache Weise realisieren.

Die Ausführungsformen des erfindungsgemäßen Schnellverschlusses werden nun anhand der Zeichnungen erläutert. In diesen sind:
**Fig. 1** ein Schnitt A-A durch eine Klemme einer Ausführungsform des Schnellverschlusses zum Verbinden von Elementen von Druckgefäßen oder Pipelines mit runder Querschnittsform,

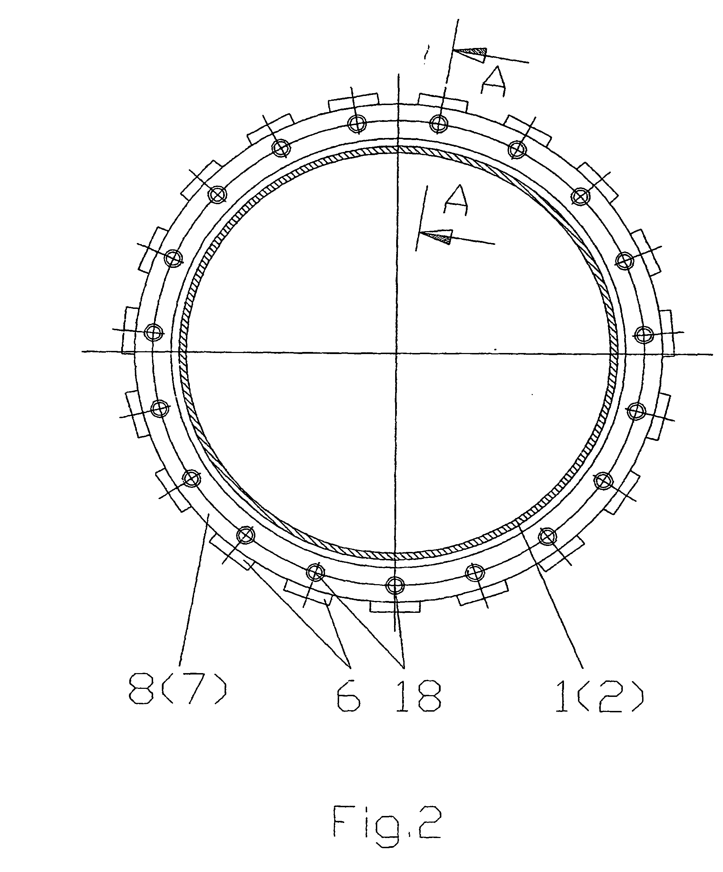

**Fig. 2** ein Aufriß der Ausführungsform des Schnellverschlusses nach Fig. 1,
**Fig. 3** ein Schnitt B-B durch die Scharnierebene einer Ausführungsform des Schnellverschlusses zum Verbinden von Elementen von Druckgefäßen oder Pipelines mit ovaler Querschnittsform,
**Fig. 4** ein Aufriß der Ausführungsform des Schnellverschlusses nach Fig. 3 und
**Fig. 5** eine Seitenansicht der Ausführungsform des Schnellverschlusses nach Fig. 3.

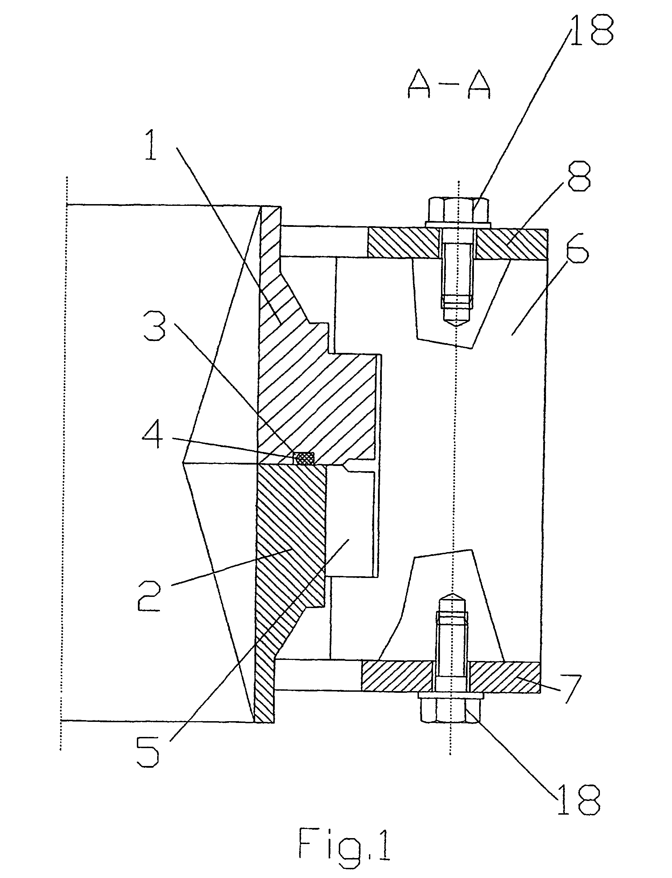

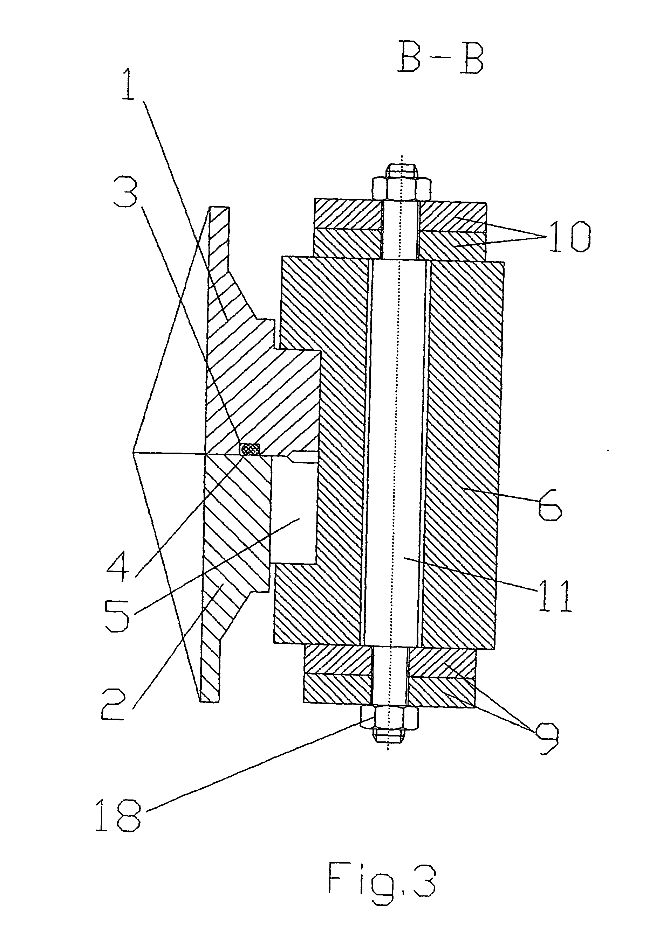

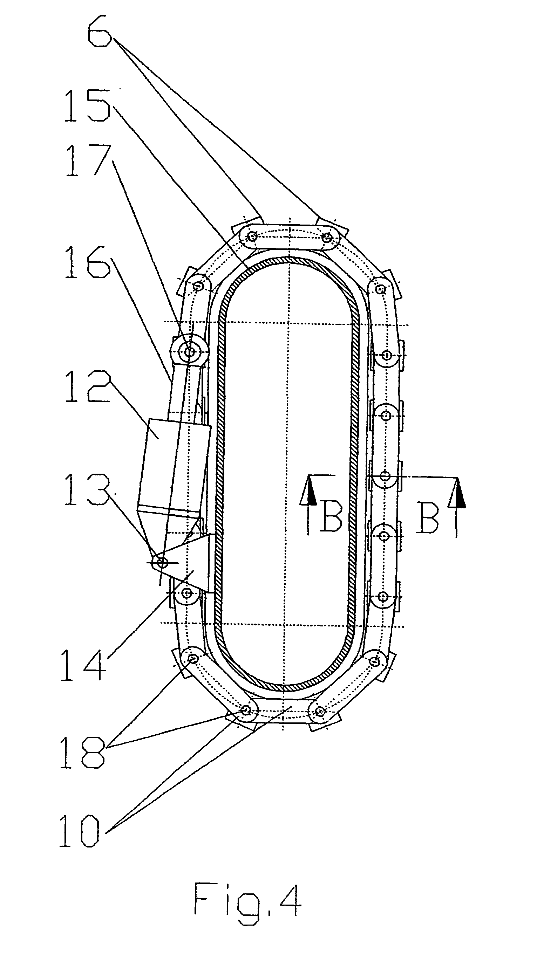

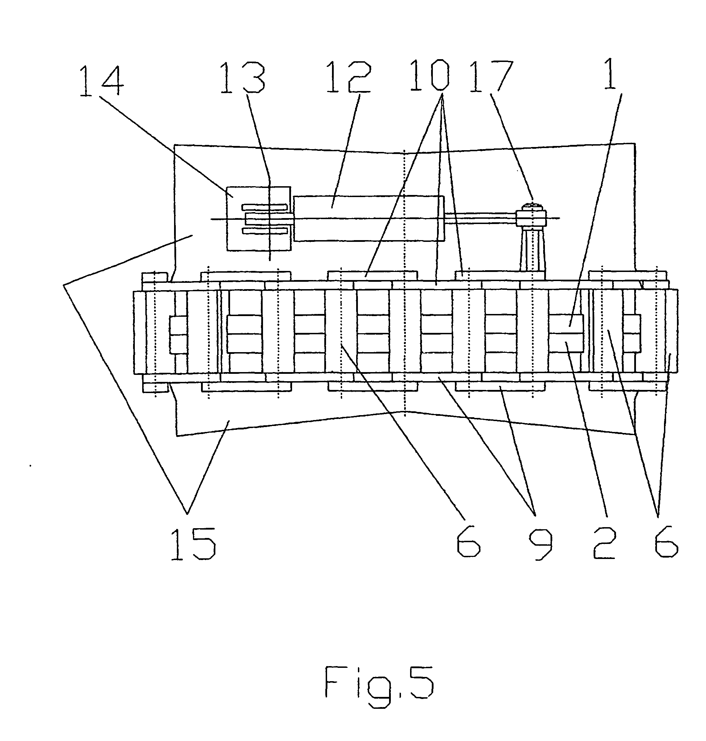

Wie aus den Figuren der Zeichung hervorgeht, weist der Schnellverschluß zwei Flansche 1 und 2 auf, wobei im Flansch 1 eine Nut 3 für eine elastische Dichtung 4 vorgesehen ist und der Flansch 2 mit Zähnen 5 versehen ist. Die beiden Flansche 1 und 2 sind untereinander durch einzelne Klemmen 6 verbunden, die sich am Umfang der Flansche 1 und 2 befinden und deren Anzahl der Anzahl und der Teilung der im Flansch 2 ausgeführten Zähne 5 entspricht. Bei der Ausführungsform des Schnellverschlusses nach den Fig. und 2 weisen die beiden Flansche 1 und 2 eine runde Querschnittsform auf und die Klemmen 6 sind ihrerseits untereinander durch zwei Blechringe 7 und 8 - in Fig. 1 unten bzw. oben dargestellt - sowie Schraubenverbindungen 18 verbunden. Bei der aus den Fig. 3 bis 5 hervorgehenden Ausführungsvariante des Schnellverschlusses weisen die beiden Flansche eine unrunde, nämlich ovale Querschnittsform auf und die Klemmen 6 sind untereinander durch - gesehen in Fig. 5 - untere Segmente 9 und obere Segmente 10, zylindrische Scharniere 11 und Schraubenverbindungen 18 verbunden. Als Antriebselement der ringförmig zu einem Klemmring verbundenen Klemmen 6 ist ein Hydraulikzylinder 12 vorgesehen, der seinerseiets durch einen Bolzen 13 und eine Pratze 14 mit einem umbeweglichen Teil eines Kessels 15 verbunden ist, und dessen Kolbenstange 16 durch einen verlängerten Bolzen 17 des zylindrischen Scharniers 11 mit dem Klemmring verbunden ist. Durch Betätigung der Kolbenstange 16 des Hydraulikzylinders 12 in die eine oder andere Richtung werden die Klemmen 6 um die Symmetrieachse der Flansche 1 und 2 um eine Teilung verschoben, so daß die Position der Klemmen 6 bei ausgefahrener Kolbenstange 16 des Hydraulikzylinders 12 mit der Position der Zähne 5 übereinstimmt - Verschlußzustand - oder in der anderen Richtung - eingefahrene Kolbenstange 16 des Hydraulikzylinders 12 - die Position der Klemmen 6 mit den Zahnzwischenräumen übereinstimmt - Verschluß offen. Die beiden Teile des Kessels 15 können voneinander getrennt werden.

## Patentansprüche

1. Schnellverschluß aus zwei Flanschen (1; 2) mit jeweils unrunder Querschnittsform, wobei ein Flansch (1 oder 2) mit einer eine elastische Dichtung (4) aufnehmenden Nut (3) versehen ist, in einem (1 oder 2) der beiden Flansche (1; 2) Zähne (5) vorgesehen sind und die beiden Flansche (1; 2) untereinander durch einzelne Klemmen (6) verbunden sind, die sich am Umfang der Flansche (1; 2) befinden und deren Anzahl der Anzahl und der Teilung der im Flansch (1 oder 2) ausgeführten Zähne (5) entspricht, und wobei die einzelnen Klemmen (6) untereinander durch übereinander angeordnete Segmente (9 bzw. 10) und zylindrische Scharniere (11) einen Klemmring bildend verbunden sind.

2. Schnellverschluß aus zwei Flanschen (1; 2), wobei ein Flansch (1 oder 2) mit einer eine elastische Dichtung (4) aufnehmenden Nut (3) versehen ist, in einem (1 oder 2) der beiden Flansche (1; 2) Zähne (5) vorgesehen sind und die beiden Flansche (1; 2) untereinander durch einzelne Klemmen (6) verbunden sind, die sich am Umfang der Flansche (1; 2) befinden und deren Anzahl der Anzahl und der Teilung der im Flansch (1 oder 2) ausgeführten Zähne (5) entspricht, und wobei die Klemmen (6) ihrerseits durch zwei Blechringen (7; 8) verbunden sind.

## Claims

1. A quick fastener consisting of two flanges (1; 2) with in each case an out-of-round cross-sectional shape, whereby one flange (1 or 2) is provided with a groove (3) accommodating an elastic gasket (4), teeth (5) are provided in one (1 or 2) of the two flanges (1; 2) and the two flanges (1; 2) are connected together by individual clamps (6), which are located at the periphery of the flanges (1; 2) and whose number corresponds to the number and the pitch of the teeth (5) produced in the flange (1 or 2), and whereby the individual clamps (6) are joined together by means of segments (9 and 10 respectively) arranged one above the other and cylindrical hinges (11) thereby forming a clampinq rinq.

2. A quick fastener consisting of two flanges (1; 2), whereby one flange (1 or 2) is provided with a groove (3) accommodating an elastic gasket (4), teeth (5) are provided in one (1 or 2) of the two flanges (1; 2) and the two flanges (1; 2) are connected together by individual clamps (6), which are located at the periphery of the flanges (1; 2) and whose number corresponds to the number and the pitch of the teeth (5) produced in the flange (1 or 2), and whereby the clamps (6) are connected for their part by two sheet-metal rings (7; 8).

## Revendications

1. Fermeture éclair constituée de deux brides (1 ; 2) avec une forme ovale en section transversale à chaque fois, une bride (1 ou 2) étant pourvue d'une rainure (3) recevant un joint élastique (4), des dents (5) étant prévues dans une (1 ou 2) des deux brides (1 ; 2) et les deux brides (1 ; 2) étant reliées entre elles par des pinces individuelles (6) qui se trouvent à la périphérie des brides (1 ; 2) et dont le nombre correspond au nombre et à la division des dents (5) réalisées dans la bride (1 ou 2), et les pinces individuelles (6) étant reliées entre elles par des segments (9 ou 10) disposés l'un sur l'autre et des charnières cylindriques (11) en formant un anneau de serrage.

2. Fermeture éclair constituée de deux brides (1 ; 2), une bride (1 ou 2) étant pourvue d'une rainure (3) recevant un joint élastique (4), des dents (5) étant prévues dans une (1 ou 2) des deux brides (1 ; 2) et les deux brides (1 ; 2) étant reliées entre elles par des pinces individuelles (6) qui se trouvent à la périphérie des brides (1 ; 2) et dont le nombre correspond au nombre et à la division des dents (5) réalisées dans la bride (1 ou 2), et les pinces (6) étant reliées pour leur part par deux anneaux en tôle (7 ; 8).
